# EUROPEAN PATENT APPLICATION

(11) **EP 4 694 316 A1**
(43) Date of publication of application: **11.02.2026**
(21) Application number: 23929222.0
(22) Date of filing: 29.03.2023
(51) Int. Cl.: H04W 28/08

(54) **WIRELESS COMMUNICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: QI, Yinan, Dongguan, Guangdong 523860 (CN)
(74) Representative: Novagraaf Technologies
(86) International application number: PCT/CN2023/084599
(87) International publication number: WO 2024/197623

(57) **Abstract**

A wireless communication method, and a device. The method comprises: a network device sending a first physical layer protocol data unit (PPDU), wherein the first PPDU comprises a first preamble portion and an ambient power enabled IoT (AMP) portion, and the first PPDU is a PPDU sent to an AMP device.

## Description

### TECHNICAL FIELD

Embodiments of the present disclosure relate to the technical field of communications, and in particular, relate to a method for wireless communication and devices therefor.

### RELATED ART

In some scenarios, a plurality of types of physical layer protocol data units (PPDU) may be used in different types of non-access point stations (non-AP STAs), for example, non-high-throughput (non-HT) PPDUs, wake up signal (WUS) PPDUs, and the like.

Due to low complexity, low power consumption, low cost, and maintenance-free characteristics of ambient power enabled Internet of things (ambient IoT or AMP IoT, AMP), large-scale deployment is considered. The design of dedicated PPDUs for AMP devices is an urgent issue that needs to be addressed.

### SUMMARY

Embodiments of the present disclosure provide a method for wireless communication and devices therefor, which are applicable to the design of a PPDU for an AMP device.

In a first aspect of the embodiments of the present disclosure, a method for wireless communication is provided. The method includes: transmitting, by a network device, a first PPDU, wherein the first PPDU includes a first preamble part and an AMP part, and the first PPDU is the PPDU transmitted to an AMP device.

In a second aspect of the embodiments of the present disclosure, a method for wireless communication is provided. The method includes: receiving, by the AMP device, the first PPDU, wherein the first PPDU includes the first preamble part and the AMP part.

In a third aspect of the embodiments of the present disclosure, a method for wireless communication is provided. The method includes:
receiving, by a non-AMP device, the first PPDU, wherein the first PPDU includes the first preamble part and the AMP part; determining the first PPDU is the PPDU transmitted to the AMP device based on at least one of the first preamble part or the AMP part.

In a fourth aspect of the embodiments of the present disclosure, a network device is provided. The network device is configured to perform the method according to the first aspect or various implementations thereof.

Specifically, the network device includes various functional modules configured to perform the method according to the first aspect or various implementations thereof.

In a fifth aspect of the embodiments of the present disclosure, an AMP device is provided. The AMP device is configured to perform the method according to the second aspect or various implementations thereof.

In a sixth aspect of the embodiments of the present disclosure, a non-AMP device is provided. The non-AMP device is configured to perform the method according to the third aspect or various implementations thereof.

Specifically, the non-AMP device includes various functional modules configured to perform the method according to the third aspect or various implementations thereof.

In a seventh aspect of the embodiments of the present disclosure, a network device is provided. The network device includes a processor and a memory. The memory is configured to store one or more computer programs. The processor is configured to call and run the one or more computer programs stored in the memory to perform the method according to the first aspect or various implementations thereof.

In an eighth aspect of the embodiments of the present disclosure, an AMP device is provided. The AMP device includes a processor and a memory. The memory is configured to store one or more computer programs. The processor is configured to call and run the one or more computer programs stored in the memory to perform the method according to the second aspect or various implementations thereof.

In a ninth aspect of the embodiments of the present disclosure, a non-AMP device is provided. The non-AMP device includes a processor and memory. The memory is configured to store one or more computer programs. The processor is configured to configured to call and run the one or more computer programs stored in the memory to perform the method according to the third aspect or various implementations thereof.

In a tenth aspect of the embodiments of the present disclosure, a chip is provided. The chip is configured to perform the method according to any one of the first to third aspects. Specifically, the chip includes a processor, configured to call one or more computer programs from a memory, to cause a device equipped with the chip to perform the method according to any one of the first to third aspects or various implementations thereof.

In an eleventh aspect of the embodiments of the present disclosure, a computer-readable storage medium is provided. The computer-readable storage medium stores one or more computer programs. The one or more computer programs, when loaded and run by a computer, cause the computer to perform the method according to any one of the first to third aspects or various implementations thereof.

In a twelfth aspect of the embodiments of the present disclosure, a computer program product is provided. The computer program product includes one or more computer program instructions, The one or more computer program instructions, when loaded and executed by a computer, cause the computer to perform the method according to any one of the first to third aspects or various implementations thereof.

In a thirteenth aspect of the embodiments of the present disclosure, a computer program is provided. The computer program, when loaded and run by a computer, causes the computer to perform the method according to any one of the first to third aspects or various implementations thereof.

By implementing the technical solutions, the network device may transmit the first PPDU to the AMP device, wherein the first PPDU includes the first preamble part and the AMP part, thereby achieving the design of the PPDU applicable to the AMP device.

### BRIEF DESCRIPTION OF DRAWINGS

FIG. 1 is a schematic diagram of a communication system architecture according to some embodiments of the present disclosure;
FIG. 2 is a schematic diagram of a zero-power communication system according to some embodiments of the present disclosure;
FIG. 3 is a schematic illustration of energy harvesting according to some embodiments of the present disclosure;
FIG. 4 is a schematic illustration of backscatter communication according to some embodiments of the present disclosure;
FIG. 5 is a schematic illustration of a resistance load modulation circuit according to some embodiments of the present disclosure;
FIG. 6 is a schematic format diagram of a non-HT PPDU according to some embodiments of the present disclosure;
FIG. 7 is a schematic format diagram of a WUR PPDU according to some embodiments of the present disclosure;
FIG. 8 is a schematic diagram of a method for wireless communication according to some embodiments of the present disclosure;
FIG. 9 to FIG. 14 are schematic format diagrams of an AMP PPDU according to some embodiments of the present disclosure;
FIG. 15 is a schematic block diagram of a network device according to some embodiments of the present disclosure;
FIG. 16 is a schematic block diagram of an AMP device according to some embodiments of the present disclosure;
FIG. 17 is a schematic block diagram of a non-AMP device according to some embodiments of the present disclosure;
FIG. 18 is a schematic block diagram of a communication device according to some embodiments of the present disclosure;
FIG. 19 is a schematic block diagram of a chip according to some embodiments of the present disclosure; and
FIG. 20 is a schematic block diagram of a communication system according to some embodiments of the present disclosure.

### DETAILED DESCRIPTION

The technical solutions according to the embodiments of the present disclosure are described hereinafter in combination with the accompanying drawings for the embodiments of the present disclosure. It is obvious that the described embodiments are merely part but not all of the embodiments of the present disclosure. All other embodiments derived by persons of ordinary skill in the art without creative efforts based on the embodiments in the present disclosure are within the protection scope of the disclosure.

The technical solutions according to the embodiments of the present disclosure are applicable to various communication systems, such as a global system of mobile communication (GSM), a code-division multiple access (CDMA) system, a wideband code-division multiple access (WCDMA) system, a general packet radio service (GPRS) system, a long-term evolution (LTE) system, an advanced long-term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5^{th} generation (5G) communication system, a cellular IoT system, a cellular passive IoT system, or other communication systems.

In general, the traditional communication systems support a limited number of connections and is relatively easy to implement. However, with the development of the communication technologies, the mobile communication systems not only support traditional communications, but also support, for example, device-to-device (D2D) communications, machine-to-machine (M2M) communications, machine-type communications (MTC), vehicle-to-vehicle (V2V) communications, vehicle-to-everything (V2X) communications, and the like. The embodiments of the present disclosure are also applicable to such communication systems.

In some embodiments, the communication systems according to the embodiments of the present disclosure are also applicable to a carrier aggregation (CA) scenario, a dual connectivity (DC) scenario, or a standalone (SA) scenario.

In some embodiments, the communication systems according to the embodiments of the present disclosure are also applicable to an unlicensed spectrum. The unlicensed spectrum may also be considered as a shared spectrum. Alternatively, the communication systems according to the embodiments of the present disclosure are also applicable to a licensed spectrum. The licensed spectrum may also be considered as a non-shared spectrum.

Various embodiments are described in conjunction with a network device and a terminal device in the embodiments of the present disclosure. The terminal device is also referred to as a user equipment (UE), an access terminal, a subscriber unit, a subscriber station, a rover station, a mobile station, a remote station, a remote terminal, a mobile device, a user terminal, a terminal, a wireless communication device, a user agent, a user apparatus, or the like.

In the embodiments of the present disclosure, the network device is a device for communicating with the mobile device, and the network device is an access point (AP) in WLAN, a base transceiver station (BTS) in GSM or CDMA, a NodeB (NB) in WCDMA, an evolved NodeB (eNB or eNodeB) in LTE, a relay station or an AP, an in-vehicle device, a wearable device, or a network device in an NR network (gNB), in cellular IoT, in cellular passive IoT, in a future evolutional PLMN network, or in an NTN network.

By way of example but not limitation, the network device has mobility in the embodiments of the present disclosure. For example, the network device is a mobile device. In some embodiments, the network device is a satellite or a balloon station. For example, the satellite is a low Earth orbit (LEO) satellite, a medium Earth orbit (MEO) satellite, a geostationary Earth orbit (GEO) satellite, a high elliptical orbit (HEO) satellite, or the like. In some embodiments, the network device is also an NB located on land, water, or the like.

In the embodiments of the present disclosure, the network device provides services for cells, and the terminal device communicates with the network device over the transmission resources (e.g., frequency domain resources, or spectrum resources) used in the cells. The cell corresponds to the network device (e.g., the NB), and the cell belongs to a macro NB or an NB corresponding to a small cell. The small cell includes a metro cell, a micro cell, a pico cell, a femto cell, or the like. The small cells have small coverage and low transmit power, and are suitable for providing high-speed data transmission services.

The terminal device may be a station (STA) in the WLAN, for example, a cellular phone, a cordless phone, a Session Initiation Protocol (SIP) phone, a wireless local loop (WLL) STA, a personal digital assistant (PDA), a hand-held device with a wireless communication capability, a computing device or other processing devices connected to a wireless modem, an in-vehicle device, a wearable device, a terminal device in a next generation communication system (e.g., the NR network), a terminal device in an evolved public land mobile network (PLMN) network, a terminal device in cellular IoT, a terminal device in cellular passive IoT, or the like.

In the embodiments of the present disclosure, the terminal device is deployed on land (e.g., indoors or outdoors, or handheld, wearable, or vehicle-mounted deployment); or the terminal device may be deployed on water (for example, on a ship); or the terminal device may be deployed in the air (e.g., on an aircraft, a balloon, or a satellite).

In the embodiments of the present disclosure, the terminal device is a mobile phone, a pad, a computer with a radio transceiver function, a virtual reality (VR) terminal device, an augmented reality (AR) terminal device, a wireless terminal device in industrial control, a wireless terminal device in self-driving, a wireless terminal device in remote medical, a wireless terminal in smart grid, a wireless terminal in transportation safety, a wireless terminal in smart city, or a wireless terminal device in smart home.

By way of example but not limitation, in the embodiments of the present disclosure, the terminal device may be a wearable device. The wearable device may also be referred to as a wearable smart device, which is a generic name for wearable devices such as glasses, gloves, watches, clothes, and shoes that are developed by applying wearable technologies for smart designs of daily wearables. The wearable device is a portable device that is directly worn on a body or integrated into clothing or an accessory of a user. The wearable device is not only a hardware device, but also implements powerful functions by software support, data exchange, and cloud interaction. In a broad sense, the wearable smart device includes a full-functionality and large-size device capable of implementing all or part of functions without relying on a smart phone, for example, a smart watch or smart glasses; and includes a device specializing in specific application functions and needs to be used with another device such as a smart phone, for example, various smart bracelets or smart jewelry for vital sign monitoring.

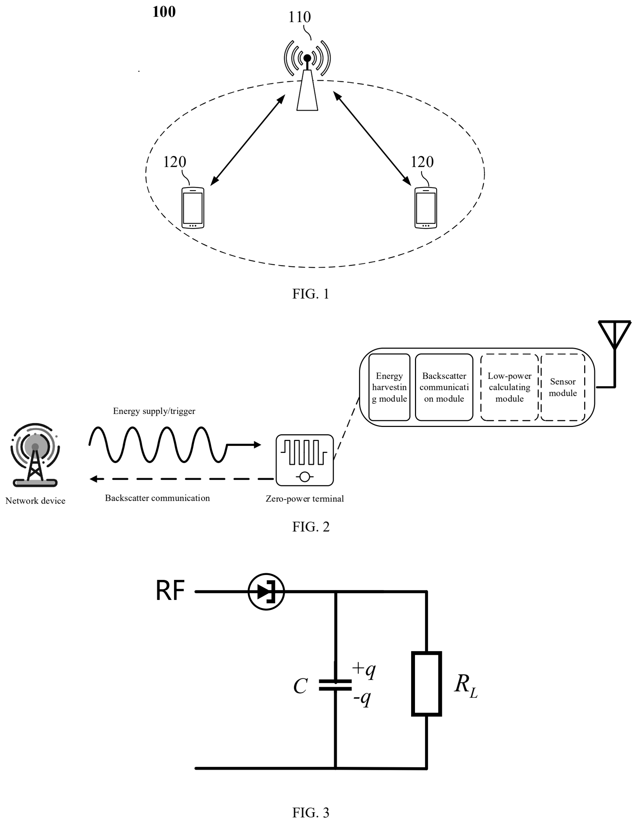

Exemplary, the communication system 100 according to the embodiments of the present disclosure is illustrated in FIG. 1. The communication system 100 includes a network device 110. The network device 110 is a device capable of communicating with a terminal device 120 (also referred to as a communication terminal or a terminal). The network device 110 provides communication coverage for a specific geographical area, and is capable of communicating with the terminal device in the coverage area.

FIG. 1 illustrates one network device and two terminal devices. In some embodiments, the communication system 100 may include a plurality of network devices, and another quantity of terminal devices may be deployed within the coverage of each of the network devices, which is not limited in the embodiments of the present disclosure.

In some embodiments, the communication system 100 may further include another network entity such as a network controller, a mobile management entity, or the like, which is not limited in the embodiments of the present disclosure.

It should be understood that devices with the communication function in the network/system in the embodiments of the present disclosure are referred to as the communication devices. Using the communication system 100 illustrated in FIG. 1, as an example, the communication device includes the network device 110 and the terminal device 120 that have the communication function, and the network device 110 and the terminal device 120 are specific devices as described above, which are not repeated herein. The communication device may further include another device in the communication system 100, for example, a network controller, a mobile management entity, or the like, which is not limited in the embodiments of the present disclosure.

It should be understood that the terms "system" and "network" herein are interchangeably used herein. The term "and/or" herein merely indicates an association relationship describing associated objects, that is, three types of relationships. For example, the phrase "A and/or B" indicates (A), (B), or (A and B). In addition, the character "/" generally indicates an "or" relationship between the associated objects.

It should be understood that the term "indicate" in the embodiments of the present disclosure means the direct indication, indirect indication, or an associated relationship. For example, A indicating B means that A directly indicates B, for example, B is acquired by A; A indirectly indicates B, for example, A indicates C and B is acquired by C; A and B are associated.

In the description of the embodiments of the present disclosure, the term "corresponding" mean that there is a direct correspondence relationship or indirect correspondence relationship between two objects, an association relationship between two objects, a relationship of indicating or being indicated, or a relationship of configuring and being configured.

In the embodiments of the present disclosure, the term "predefined" is achieved by pre-storing corresponding codes or forms in the device (e.g., including the terminal device and the network device) or other means for indicating relevant information, and the specific implementations are not limited in the present disclosure. For example, the predefinition is defined in the protocol.

In the embodiments of the present disclosure, the term "protocol" indicates a standard protocol in the field of communications, for example, an LTE protocol, an NR protocol, or a related protocol applied to the future communication system, which is not limited in the present disclosure.

For better understanding of the technical solutions according to the embodiments of the present disclosure, related technologies in the present disclosure are described.

### Zero-power communication

The zero-power communication emphasizes energy harvesting, backscatter communication, and low-power technologies.

As illustrated in FIG. 2, a typical zero-power communication system (e.g., an RFID system) includes a network device (for example, a reader/writer in an RFID system) and a zero-power terminal (e.g., an electronic tag). The terminal device is configured to transmit wireless power signals and downlink communication signals to the zero-power terminal and to receive backscattered signals from the zero-power terminal. A basic zero-power terminal includes an energy harvesting module, a backscatter communication module, and a low-power calculating module. In addition, the zero-power terminal further includes a memory or a sensor to store basic information (e.g., an object identifier, and the like), sensing data (an environmental temperature, an environmental humidity), and the like.

For example, the energy harvesting module is configured to harvest the energy carried via radio waves in space (in FIG. 2, the network device transmits radio waves), and is further configured to drive the low-power calculating module in the zero-power terminal and achieve backscatter communication. Upon acquiring the energy, the zero-power terminal receives a control command from the network device and transmits data to the network device based on the control command using a backscatter mode. The transmitted data may be data stored in the zero-power terminal (e.g., an identifier or pre-written information, such as production date, brand, manufacturer, and the like of the product). The zero-power terminal is further configured to load various sensors to report data captured by various sensors based on a zero-power mechanism.

Key technologies in the zero-power communication are described.

### 1). Radio frequency (RF) energy harvesting

As illustrated in FIG. 3, an RF energy harvesting module harvests energy of spatial electromagnetic waves based on an electromagnetic induction principle, and then acquires the power for driving the zero-power terminal, for example, driving a low-power demodulation and modulation module, a sensor, a memory read operation, and the like. Therefore, the zero-power terminal does not need traditional batteries.

As illustrated in FIG. 3, an RF energy harvesting module harvests energy of spatial electromagnetic waves based on an electromagnetic induction principle, and then acquires the power for driving the zero-power terminal, for example, driving a low-power demodulation and modulation module, a sensor, a memory read operation, and the like. Therefore, the zero-power terminal does not need traditional batteries.

### 2). Backscattering

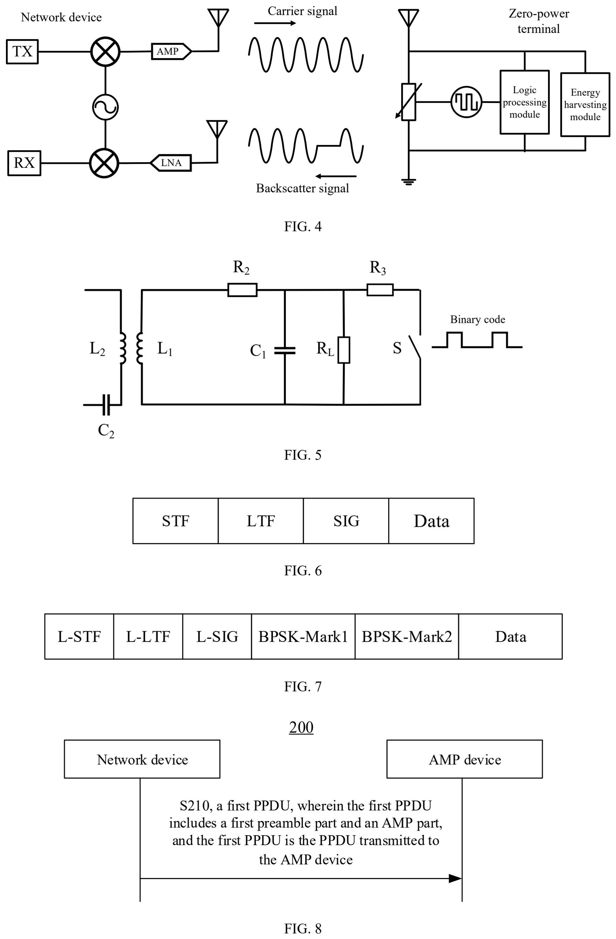

As illustrated in FIG. 4, the zero-power terminal receives a carrier signal from the network device, modulates the carrier signal, loads to-be-transmitted information, and transmits the modulated signal from the antenna. The information transmission process is referred to as backscatter communication. The backscatter and the load modulation functionality are inseparable. The load modulation adjusts and controls circuit parameters of an oscillation loop of the zero-power terminal based on the beat of a data stream, such that the parameters such as impedance of the zero-power terminal change accordingly, and the modulation process is completed. The load modulation mainly includes resistive load modulation and capacitive load modulation. In the resistive load modulation, a resistor is loaded and connected in parallel, and the resistor is controlled to be turned on or off based on a binary data stream, as illustrated in FIG. 5. The on-off of the resistor causes change of a voltage of the circuit, and thus amplitude-shift keying modulation (ASK) is implemented. That is, the modulation and transmission of the signal are achieved by adjusting the amplitude of the backscattered signal of the zero-per terminal. Similarly, in the capacitive load modulation, a circuit resonance frequency changes based on on-off of the capacitor to implement frequency-shift keying modulation (FSK). That is, the modulation and transmission of the signal are achieved by adjusting the operating frequency of the backscattered signal of the zero-power terminal.

It can be seen that the zero-power terminal modulates information of incoming signals by means of load modulation, such that the backscatter communication process is achieved. Therefore, the zero-power terminal has the following significant advantages:
(1) the zero-power terminal does not actively transmit signals, and thus a complex RF link (for example, a power amplifier (PA), an RF filter, and the like) is not required;
(2) the zero-power terminal does not need to actively generate a high-frequency signal, and thus does not need a high-frequency crystal oscillator; and
(3) Power of the terminal is not consumed in transmission of a signal from the terminal by means of backscatter communication.

### 3) Encoding technology

For data transmitted by the zero-power terminal, binary "1" and "0" are represented by different forms of codes. The RFID system typically adopts one of: reverse non-return-to-zero (NRZ) encoding, Manchester encoding, unipolar return-to-zero encoding, differential bi-phase (DBP) encoding, differential encoding, pulse interval encoding (PIE), bidirectional spatial encoding (FM0), Miller differential dynamic encoding, and the like. In general, different encoding technologies use different pulse signals to represent 0 and 1.

In some scenarios, based on energy sources and usage modes of zero-power terminals, the zero-power terminals are classified into the following types:
1) Passive zero-power terminal

The zero-power terminal (for example, an electronic tag of an RFID system) does not need an internal battery. In a case where the zero-power terminal approaches the network device (for example, a reader/writer in the RFID system), the zero-power terminal is within a near-field range formed by antenna radiation of the network device. Therefore, the antenna of the zero-power terminal generates an induced current based on electromagnetic induction, and the induced current drives a low-power chip circuit of the zero-power terminal, such that signal demodulation of a forward link and signal modulation of a reverse link (or referred to as a reflection link) are achieved. For the backscatter link, the zero-power terminal transmits signals using the backscatter mode.

It can be seen that the passive zero-power terminal does not need the internal battery to drive the forward link or the reverse link, and thus is a true zero-power terminal.

The passive zero-power terminal does not need the battery, and the RF circuit and the baseband circuit are very simple. For example, the RF circuit and the baseband circuit do not need devices such as a low-noise amplifier (LNA), a PA, a crystal oscillator, and an analog-to-digital converter (ADC). Therefore, the passive zero-power terminal has many advantages, for example, small size, light weight, low price, and long service life.

The passive zero-power terminal may also support other energy harvesting manners. By harvesting energy from the environment (e.g., luminous energy, thermal energy, kinetic energy, mechanical energy, and the like), the passive zero-power terminal acquires energy to drive the circuit, thereby supporting the terminal for communication.

### 2) Half-passive zero-power terminal

The half-passive zero-power terminal is not equipped with a conventional battery either, but may use an RF energy harvesting module to harvest energy of radio waves or use the energy harvesting module to harvest energy from the environment (for example, solar energy, thermal energy, and mechanical vibrational energy), and simultaneously, store the harvested energy in an energy storage unit (for example a capacitor). The energy storage unit may drive a chip circuitry of the zero-power terminal upon acquisition of the energy, thereby implementing signal demodulation of the forward link, and signal modulation of the reverse link, and the like operations. For the backscatter link, the zero-power terminal transmits signals using the backscatter mode; or based on harvested energy, the zero-power terminal may perform active-transmission communication using a low-power transmitter.

It may be seen that the half-passive zero-power terminal does not need a built-in battery to drive the forward link or the reverse link. Although the energy stored in the capacitor is used in operation, the energy comes from the radio energy harvested by the energy harvesting module, and thus the half-passive zero-power terminal is also a true zero-power terminal.

The half-passive zero-power terminal inherits many advantages of the passive zero-power terminal, and thus has many advantages such as a small size, a light weight, a low price, and a long service life, and the like.

### 3) Active zero-power terminal

In some scenarios, the used zero-power terminal is also an active zero-power terminal, and the terminal is equipped with a built-in battery. The battery is used to drive the low-power chip circuit of the zero-power terminal, and signals on the forward link signal are demodulated and signals on the reverse link are modulated. For the backscatter link, the zero-power terminal transmits the signals using the backscatter mode. Therefore, the zero-power (no power consumption) of the terminal means that signal transmission on the reverse link does not need power from the terminal but relies on backscattering.

The active zero-power terminal is equipped with a built-in battery to power the RFID chip, such that a read and write range of the active zero-power terminal is extended, and the communication reliability is improved. Therefore, the active zero-power terminal has been applied in some scenarios where stricter requirements are imposed on communication distance, read delay, and the like.

In some scenarios, zero-power devices are classified into the following types based on transmitter types:
(1) Zero-power devices based on backscattering (or referred to as the backscatter AMP device)
   The zero-power device transmits uplink data using the backscatter mode. The zero-power device is not equipped with an active-transmission active transmitter and is only equipped with a transmitter for backscattering. Therefore, during data transmission by the zero-power device, the network device needs to provide carriers, and the zero-power device transmits data based on the carriers by backscattering.
(2) Zero-power devices based on the active transmitter (or referred to as the active-transmission AMP device)
   The zero-power device transmits uplink data using an active transmitter with the active transmission functionality. Therefore, the zero-power device transmits data using its own active transmitter, and the carrier is provided without the network device. The active transmitters suitable for the zero-power device may be ultra-lower power ASK and ultra-low power FSK transmitters, and the like, and an overall power consumption may be reduced to 400 µw to 600 µw in a 100 µw signal.
(3) Zero-power device equipped with the backscatter transmitter and the active transmitter

The zero-power device supports the backscatter transmitter and the active transmitter. The zero-power device determines the signal transmission mode based on different situations (e.g., power amount and available environmental energy) or based on scheduling by the network device. That is, the zero-power device determines whether signal transmission is implemented using the active transmitter or the backscatter transmitter.

With the vigorous development of IoT, conventional IoT technologies may no longer satisfy the communication requirements of IoT under many scenarios such as:
1. Harsh communication environment
   In some scenarios, IoT may face high temperature, extreme low temperature, high humidity, high pressure, high radiation, or high speed, and extreme environments of the like. For example, ultra-high voltage substation, high-speed train track monitoring, extreme-cold environment monitoring, industrial production line, and the like. In such scenarios, constrained by the operational environment limits of conventional power supplies, conventional IoT terminals may fail to operate. Furthermore, extreme operating environments also do not favor maintenance of IoT, for example, battery replacement.
2. Requirements for ultra-compact terminal form factors

In some IoT communication scenarios, for example, food product traceability, commodity circulation, smart wearables, and the like, require a terminal to possess ultra-compact dimensions in order to be used in such scenarios. For example, IoT terminals used in a circulation node for commodity management often use a very compact form factor of electronic tag embedded within the product packaging. Additionally, for example, lightweight wearable devices may satisfy user requirements while enhancing user experience.

### Requirements for ultra-low-cost IoT communication

Numerous IoT scenarios require cost of an IoT terminal to be sufficiently low, in order to ensure competitive advantage using alternative technologies. For example, in logistics or warehousing scenarios, an IoT terminal may be placed on each item in order to facilitate the management of large quantities of items, thereby enabling full-process and full cycle precision management via the communication between a terminal and a logistics network. These scenarios demand the price of the IoT terminals to possess enough competition.

Consequently, in order to satisfy the requirements, ultra-low-cost, ultra-compact, battery-free, or maintenance-free IoT also need to be researched and developed within cellular networks, and zero-power IoT coincidentally satisfy this requirement.

A zero-power IoT may also be called an ambient IoT or AMP IoT. A zero-power device may also be called an ambient IoT device or AMP IoT device. The ambient IoT device may refer to an IoT device using a variety of environmental energy such as wireless radio energy, luminous energy, solar energy, heat energy, mechanical energy, and the like. This type of device may not possess the ability to store energy, but may possess a very limited ability to store energy, for example, a capacitor with a capacitance of tens of microfarads (µF).

Ambient IoT is applicable to at least the following four scenarios:
(1) Object recognition: logistics, production line management, and supply chain management
(2) Environment monitoring: monitoring temperature, humidity, and harmful gases in work and natural environments
(3) positioning: indoor positioning, smart object finding, and item positioning on production lines
(4) Smart control: smart control of various home appliances in smart homes (e.g., switching air conditioners on/off, adjusting temperature) and the smart control of facilities in agricultural greenhouses (e.g., automated irrigation and fertilization)

### 2. Cellular passive IoT

With the increasing industry-specific application of 5G, application scenarios and types of interconnected objects are increasing and becoming diversified, and thus stricter requirements are being imposed on cost and power consumption of communication terminals. Application of battery-free, ultra-low cost passive IoT devices have become a key technology of cellular IoT, which enriches the type and number of terminals linked to the 5G network, and truly implements Internet of everything. Passive IoT devices may be based on the zero-power communication technology such as the RFID technology, and may be extended based on the zero-power communication technology to adapt to cellular IoT.

FIG. 6 is a structural schematic diagram of a non-HT PPDU from 802.11a. In order to differentiate between a WUS PPDU and a non-HT PPDU, a binary phase shift keying mark1 (BPSK-Markl) and a BPSK-Mark2 has been inserted into a signal (SIG) field, illustrated in FIG. 7.

Due to low complexity, low power consumption, low cost, and maintenance-free characteristics of ambient power enabled IoTs, large-scale deployment is considered. The design of dedicated PPDUs for AMP devices is an urgent issue that needs to be addressed.

For better understanding of the technical solutions according to the embodiments of the present disclosure, the technical solutions are described in detail hereinafter with reference to specific embodiments.

As optional solutions, the related technologies may be arbitrarily combined with the technical solutions according to the embodiments of the present disclosure, which fall within the scope of protection of the embodiments of the present disclosure. The embodiments of the present disclosure include at least some of the following content.

FIG. 8 is a schematic diagram of a method 200 for wireless communication according to some embodiments of present disclosure. As illustrated in FIG. 8, the method 200 includes at least some of the following content.

In S210, a network device transmits a first PPDU, wherein the first PPDU includes a first preamble part and an AMP part, and the first PPDU is the PPDU transmitted to an AMP device.

In the embodiments of the present disclosure, an AMP device is also known as an AMP IoT device or ambient IoT device, a zero-power device, or a zero-power terminal.

In some embodiments, the AMP device may be a type of device that is defined based on complexity, power consumption, energy source, communication mode, waveform used, and the like characteristics.

For example, the AMP device may be a device communicating based on environmental energy. For instance, the AMP device acquires energy for communication from radio frequency energy, luminous energy, solar energy, heat energy, mechanical energy, and the like.

Additionally, for example, the AMP device may be a type of device having low complexity or using new waveforms, which performs communication using, for example, low level modulation schemes, or simple waveforms, or narrower bandwidth signals, or the like.

Furthermore, for example, the AMP device may be a type of device that use backscatter communication.

In some embodiments, the AMP device may also support an active transmission communication mode.

In some embodiments, a non-AMP device may be a conventional terminal in a communication system, for example, a conventional terminal in a Wi-Fi system such as a station (STA).

It should be understood that the embodiments of the present disclosure are applicable to a Wi-Fi system (or a system supporting the 802.11 protocols), 802.11 may include the conventional 802.11 protocols, or may also include future newly formulated protocols in the 802.11 family.

In some embodiments, a network device may refer to an AP or the like in a Wi-Fi system, which is not limited in the present disclosure.

It should be understood that the device for transmitting the first PPDU is not limited in the present disclosure. For example, the network device may transmit the first PPDU to the AMP device, or the terminal device may transmit the first PPDU to the AMP device, or the STA may also transmit the first PPDU to the AMP device.

In the embodiments of the present disclosure, in a case where a PPDU is the PPDU transmitted to an AMP device, the PPDU is also known as an AMP PPDU.

In some embodiments, a first preamble part may be received by a non-AMP device, and an AMP part may be received by an AMP device.

In some embodiments, the AMP part may also be received by the non-AMP device.

In some embodiments, the AMP device may receive a first PPDU, for example, the AMP part in the first PPDU.

In some embodiments, the non-AMP device may also receive the first PPDU, for example, the first preamble part in the first PPDU, or the first preamble part and the AMP part

In some embodiments, the first preamble part is also known as a legacy preamble part.

In some embodiments, at least one of the preamble part or the AMP part is used to indicate that the first PPDU is the AMP PPDU. In other words, the first PPDU is the PPDU transmitted to the AMP device. For example, the first PPDU is indicated by a new field in the first preamble part or the AMP part to indicate the first PPDU, or indicated by an existing field in the first preamble part.

In this way, the non-AMP device may determine that the first PPDU is the AMP PPDU based on at least one of the preamble part or the AMP part, or alternatively, the first PPDU is the PPDU transmitted to the AMP device.

In some embodiments, the first preamble may include a legacy Short Training field (L-STF), a legacy Long Training field (L-LTF), and a legacy SIGNAL (L-SIG) field.

In some embodiments, a modulation and coding scheme (MCS) for the L-SIG field in the first preamble part is used to indicate that the first PPDU is the AMP PPDU, or in other words, the first PPDU is the PPDU transmitted to the AMP device. For instance, when a MCS field is configured as MCS0 to indicate that the first PPDU is the AMP PPDU.

### Embodiments 1:

Indicating an AMP PPDU using an identifier field in a legacy preamble part

In some embodiments, a first preamble part includes a target identifier field, wherein a modulation scheme for the target identifier field is used to indicate that the first PPDU is the AMP PPDU, or in other words, the first PPDU is the PPDU transmitted to an AMP device.

In some embodiments, the modulation schemes for the target identifier field and an identifier field (i.e., BPSK-Mark1 and BPSK-Mark2) in a wake up radio PPDU (WUR PPDU) are not identical, in this way, it is possible to differentiate between the AMP PPDU and the WUR PPDU using the modulation scheme of the target identifier field.

In some embodiments, the target identifier field include a first identifier field and a second identifier field, wherein the modulation schemes for the first identifier field and the second identifier field are used to indicate that the first PPDU is the AMP PPDU, or in other words, the first PPDU is the PPDU transmitted to the AMP device.

In some embodiments, at least one of the modulation schemes for the first identifier field and the second identifier field is not binary phase shift keying (BPSK).

Specifically, at least one of the modulation schemes for the first identifier field and the second identifier field is quadrature binary phase shift keying (Q-BPSK).

### Embodiments 1-1: the modulation scheme for the first identifier field is Q-BPSK (denoted as Q-BPSK-Mark1 field), the modulation scheme for the second identifier field is Q-BPSK (denoted as Q-BPSK-Mark2 field)

In this way, it is possible to differentiate between the AMP PPDU and the WUR PPDU using the modulation schemes for the first identifier field and the second identifier field.

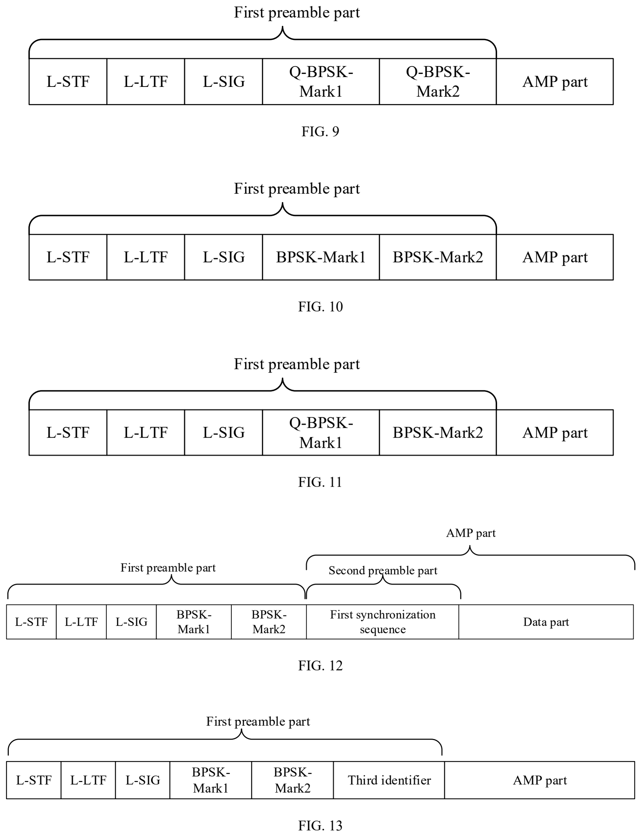

In some embodiments, illustrated in FIG. 9, the first identifier field follows the L-SIG field, and the second identifier field follows the first identifier field.

In the embodiments 1-1, for further distinguishment of the AMP PPDU from a high-throughput PPDU (HT PPDU), values of both the first identifier field and the second identifier field may be configured such that a predefined relationship with a value of the L-SIG field is satisfied.

In one implementation, the values of the first identifier field and the second identifier field are a logic complement to the value of the L-SIG field.

For instance, in a case where the value of the L-SIG field is 0, the value of the first identifier field and the value of the second identifier field may both be 1.

In another implementation, isomorphic values of the first identifier field and the second identifier field are equal to the value of the L-SIG field.

For instance, in a case where the value of the L-SIG field is 0, the values of both the first identifier field and the second identifier field are the same, for instance, both 0, or both 1.

In the embodiments 1-2, the modulation scheme for the first identifier field is Q-BPSK (denoted as Q-BPSK-Mark1 field), and the modulation scheme for the second identifier field is Q-BPSK (denoted as Q-BPSK-Mark2 field).

In this way, it is possible to differentiate between the AMP PPDU and the WUR PPDU using the modulation schemes for the first identifier field and the second identifier field.

In some embodiments, illustrated in FIG. 10, the first identifier field follows the L-SIG field, and the second identifier field follows the first identifier field.

In the embodiments 1-1, for further differentiation between the AMP PPDU and a very-high-throughput (VHT PPDU), the values of both the first identifier field and the second identifier field may be configured such that a predefined relationship with a value of the L-SIG field is satisfied.

In one implementation, the values of the first identifier field and the second identifier field are a logic complement to the value of the L-SIG field.

For instance, in a case where the value of the L-SIG field is 0, the values of the first identifier field and the second identifier field may both be 1.

In another implementation, the isomorphic values of the first identifier field and the second identifier field are equal to the value of the L-SIG field.

For instance, in a case where the value of the L-SIG field is 0, the values of both the first identifier field and the second identifier field are the same, for instance, both being 0, or both being 1.

Embodiments 1 to 3: the modulation scheme for the first identifier field is Q-BPSK (denoted as Q-BPSK-Mark1 field), and the modulation scheme for the second identifier field is Q-BPSK (denoted as Q-BPSK-Mark2 field).

In this way, it is possible to differentiate between the AMP PPDU and the WUR PPDU using the modulation schemes for the first identifier field and the second identifier field.

In some embodiments, illustrated in FIG. 11, the first identifier field follows the L-SIG field, and the second identifier field follows the first identifier field.

### Embodiments 2: indicating the AMP PPDU via a non-legacy synchronization sequence

In some embodiment, an AMP part may include a first synchronization sequence, wherein the first synchronization sequence is the synchronization sequence (or referred to as AMP-sync) associated with the AMP device.

In some embodiments, the first synchronization sequence and a second synchronization sequence are not identical, and the second synchronization sequence is a legacy synchronization (legacy sync) sequence.

For instance, under a high data rate scenario, the first synchronization may be [*G̅*], and in a low data rate scenario, the first synchronization may be [GG], wherein G is not identical to synchronization sequence W in the WUR PPDU.

In some embodiments, the AMP part includes a second preamble part (a.k.a. AMP preamble part), and the second preamble part includes the first synchronization sequence.

In some embodiments, as illustrated in FIG. 12, the first preamble part includes a first BPSK identifier field (denoted as BPSK-Mark1) and a second BPSK identifier field (denoted as BPSK-Mark2), and the first synchronization sequence follows the first BPSK identifier field and the second BPSK identifier field.

It should be understood that embodiments 1 and embodiments 2 may each be implemented individually, or may be implemented in combination, i.e., a network device may indicate the AMP PPDU solely via the first synchronization sequence, or may also indicate the AMP PPDU solely via the target identifier field, or may indicate the AMP PPDU via the target identifier field and the first synchronization sequence. For instance, the first preamble part before the first synchronization sequence in FIG. 12 uses a design format according to the embodiments illustrated in FIG. 9 to FIG. 11.

### Embodiments 3: indicating the AMP PPDU, by adding an identifier field to the legacy preamble part

In some embodiments, the first preamble part includes a third identifier field, and the third identifier field is used to indicate that the first PPDU is the AMP PPDU, or in other words, the first PPDU is the PPDU transmitted to the AMP device.

In some embodiments, as illustrated in FIG. 13, the first preamble part includes the first BPSK identifier field and the second BPSK identifier field, and the third identifier field, wherein the third identifier field follows the first BPSK identifier field and the second BPSK identifier field. That is, to indicate the AMP PPDU, the extra identifier field may be added following a legacy BPSK identifier field.

In some embodiments, a symbol of the third identifier field belongs to a set {1, 2, 3, 4}.

That is, the third identifier field may occupy 1 OFDM symbol, 2 OFDM symbols, 3 OFDM symbols, or 4 OFDM symbols.

In some embodiments, the modulation scheme of the third identifier field may be BPSK or Q-BPSK.

It should be understood that the embodiments 1 and the embodiments 3 may each be implemented individually, or may be implemented in combination, i.e., the network device may indicate the AMP PPDU solely via the third identifier field, or may also indicate the AMP PPDU solely via the target identifier field, or may also indicate the AMP PPDU via the target identifier field and the third identifier field. For instance, substituting the first BPSK identifier field and the second BPSK identifier field in FIG. 13 for the target identifier field in FIG. 9 to FIG. 11.

### Embodiments 4: indicating the AMP PPDU, by adding an identifier field to an AMP preamble part

In some embodiments, an AMP part includes a second preamble part (a.k.a. AMP preamble part), wherein a second preamble part includes a fourth identifier field, and the fourth identifier field is used to indicate that the first PPDU is the AMP PPDUU, or in other words, the first PPDU is the PPDU transmitted to the AMP device.

That is, indicating the PPDU is the AMP PPDU by adding an identifier field in the AMP preamble part.

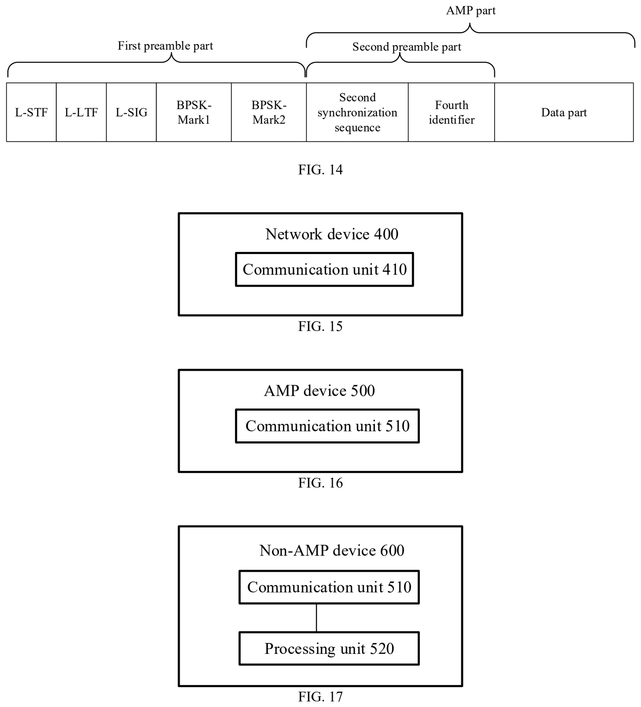

In some embodiments, as illustrated in FIG. 14, the second preamble part includes a second synchronization sequence and the fourth identifier field, and the fourth identifier field follows the second synchronization sequence, wherein the second synchronization sequence is a legacy synchronization sequence W.

In some embodiments, the fourth identifier field may be generated by the legacy synchronization sequence W.

For instance, in a high data rate scenario, the fourth identifier field may be [*W̅W̅*] , in a low data rate scenario, the first synchronization may be [*WWWW*]*.*

In some embodiments, wherein a symbol of the fourth identifier field belongs to a set {1, 2, 3, 4}.

That is, the fourth identifier field may occupy 1 OFDM symbol, 2 OFDM symbols, 3 OFDM symbols, or 4 OFDM symbols.

In some embodiments, the modulation scheme of the fourth identifier field may be BPSK or Q-BPSK.

It should be understood that the embodiments 1 and the embodiments 4 may each be implemented individually, or may be implemented in combination.

For example, the AMP PPDU is indicated by the target identifier field and the first synchronization sequence. In this instance, the first preamble part before the first synchronization sequence in FIG. 12 uses the design format illustrated by the embodiments in FIG. 9 to FIG. 11.

Additionally, for example, the network device may indicate the AMP PPDU via the target identifier field and the third target identifier. In this instance, substituting the first BPSK identifier field and the second BPSK identifier field in FIG. 13 for the target identifier field in FIG. 9 to FIG. 11.

Additionally, for example, the network device may indicate the AMP PPDU via the target identifier field, and the first synchronization sequence, and the third identifier field. The AMP part in FIG. 13 may use the design format in FIG. 12, and substitute the target identifier field in FIG. 9 to FIG. 11 for the first BPSK identifier field and the second BPSK identifier field in FIG. 13.

For example, the network device may indicate the AMP PPDU via the target identifier field and the fourth identifier field, in this instance, the first preamble part in FIG. 14 may use the design format of the first preamble part in FIG. 9 to FIG. 11.

### Embodiments 5: indicating the AMP PPDU, using an existing field in a legacy preamble part

In some embodiments, the first PPDU is indicated as the AMP PPDU via a length field in an L-SIG field of the first preamble part, or in other words, the first PPDU is the PPDU transmitted to the AMP device.

For instance, configuring to satisfy that a value of the length field modulo 3 is not equal to 0. As an example, configuring the value of the length field as 3k+1 or 3k+2, wherein k is an integer.

### Embodiments 6:

In some embodiments, the AMP part includes a medium access control (MAC) part, a MAC header of the MAC part may be used to indicate that the first PPDU is the AMP PPDU, or in other words, the first PPDU is the PPDU transmitted to the AMP device.

For instance, a type field in the MAC header is used to indicate that the first PPDU is the AMP PPDU, that is, the first PPDU is the PPDU transmitted to the AMP device. As an example, in a case where a value of the type field being a reserved value (for example, 5, 6, or 7), the type field indicates that the first PPDU is the AMP PPDU, that is, the first PPDU is the PPDU transmitted to the AMP device.

In summary, in the embodiments of the present disclosure, the network device may transmit the first PPDU, wherein the first PPDU includes the legacy preamble part and the AMP part. Accordingly, the non-AMP device may determine that the first PPDU is the PPDU transmitted to the AMP device via at least one of the legacy preamble part or the AMP part, and the AMP device may receive a data message or a control message in the first PPDU in the AMP part that is acquired by the network device, and transmitted to the AMP device.

For example, the network device may indicate that the first PPDU is the PPDU transmitted to the AMP device via the target identifier field in the legacy preamble part.

Additionally, for example, the network device may indicate that the first PPDU is the PPDU transmitted to the AMP device via the additional identifier field in the legacy preamble part.

As another example, the network device may indicate that the first PPDU is the PPDU transmitted to the AMP device using a synchronization sequence different from the legacy synchronization sequence.

As another example, the network device may indicate, via the additional identifier field in the AMP part, that the first PPDU is the PPDU transmitted to the AMP device.

As another example, the network device may indicate, via the length field in the L-SIG field in the legacy preamble part, that the first PPDU is the PPDU transmitted to the AMP device.

As another example, the network device may indicate, via the type field in the MAC header of the MAC part in the AMP part, that the first PPDU is the PPDU transmitted to the AMP device.

Thus, based on configurations according to the above aspect, the non-AMP device and the AMP device may differentiate between an AMP PPDU and a non-AMP PPDU (e.g., a WUR PPDU and the like).

The method embodiments of the present disclosure are described above in detail in conjunction with FIG. 8 to FIG. 14, and apparatus embodiments of the present disclosure are described hereinafter in detail in conjunction with FIG. 15 to FIG. 20. It should be understood that the apparatus embodiments correspond to the method embodiments, and thus for similar description, reference may be made to the method embodiments.

FIG. 15 is a schematic block diagram of a communication device 400 according to some embodiments of the present disclosure. As illustrated in FIG. 15, the communication device 400 includes: a communication unit 410, configured to receive a first PPDU, wherein the first PPDU includes a first preamble part and an AMP part, and the first PPDU is the PPDU transmitted to an AMP device.

In some embodiments, the first preamble part includes a target identifier field, wherein a modulation scheme of the target identifier field is used to indicate that the first PPDU is the PPDU transmitted to the AMP device.

In some embodiments, the target identifier field includes a first identifier field and a second identifier field, wherein the modulation schemes for at least one of the first identifier field or the second identifier field is used to indicate that the first PPDU is the PPDU transmitted to the AMP device.

In some embodiments, the modulation schemes for the first identifier field and the second identifier field are both Q-BPSK; or the modulation scheme for the first identifier field is Q-BPSK and the modulation scheme for the second identifier field is BPSK; or the modulation scheme for the second identifier is Q-BPSK and the modulation scheme for the first identifier field is BPSK.

In some embodiments, the first preamble part includes a legacy signal (L-SIG) field; and in a case where the modulation schemes for the first identifier field and the second identifier field are both Q-BPSK, or, the modulation scheme for the first identifier field is BPSK and the modulation scheme for the second identifier field is Q-BPSK, values of the first identifier field and the second identifier field satisfy a predefined relationship with a value of the L-SIG field.

In some embodiments, wherein the AMP part includes a second preamble part, the second preamble part including a first synchronization sequence, wherein the first synchronization sequence is a synchronization sequence associated with the AMP device, and the first synchronization sequence is used to indicate that the first PPDU is the PPDU transmitted to the AMP device.

In some embodiments, the first preamble part includes a first BPSK identifier field and a second BPSK identifier field, and the first synchronization sequence follows the first BPSK identifier field and the second BPSK identifier field.

In some embodiments, the first preamble part includes a first BPSK identifier field, a second BPSK identifier field, and the third identifier field, and the third identifier field follows the first BPSK identifier field and the second BPSK identifier field.

In some embodiments, a modulation scheme for the third identifier field is either BPSK or Q-BPSK.

In some embodiments, a number of symbols of the third identifier field belongs to a set {1, 2, 3, 4}.

In some embodiments, the AMP part includes a second preamble part, the second preamble part including a fourth identifier field, wherein the fourth identifier field is used to indicate that the first PPDU is the PPDU transmitted to the AMP device.

In some embodiments, the second preamble part includes a second synchronization sequence and the fourth identifier field, and the fourth identifier field follows the second synchronization sequence.

In some embodiments, a modulation scheme for the fourth identifier field is either BPSK or Q-BPSK.

In some embodiments, a number of symbols of the fourth identifier field belongs to a set {1, 2, 3, 4}.

In some embodiments, a length field in the L-SIG field of the first preamble part is used to indicate that the first PPDU is the PPDU transmitted to the AMP device.

In some embodiments, wherein a result of the length field value modulo 3 is not equal to 0.

In some embodiments, the AMP part includes a medium access control (MAC) part, wherein a type field in a MAC header of the MAC part is used to indicate that the first PPDU is the PPDU transmitted to the AMP device.

In some embodiments, a value of the type field being a reserved value indicates that the first PPDU is the PPDU transmitted to the AMP device.

Optionally, in some embodiments, an uplink communication unit may be a communication interface or a transceiver, or a communication chip, or an I/O interface of a system-on-chip (SoC). The processing unit may be one or a plurality of processors.

It should be understood that the communication device 400 according to the embodiments of the present disclosure may correspond to the network device in the method embodiments of the present disclosure, and the above and other operations and/or functions of various units of the communication device 400 are intended to implement corresponding processes of the network device in the method as illustrated in FIG. 8 to FIG. 15, which are not elaborated herein for brevity.

FIG. 16 is a schematic block diagram of an AMP device 500 according to some embodiments of the present disclosure. As illustrated in FIG. 16, the AMP device 500 includes:
a communication unit 510, configured to receive used to receive a first PPDU, wherein the first PPDU includes a first preamble part and an AMP part, and the first PPDU is the PPDU transmitted to an AMP device.

In some embodiments, the first preamble part includes a target identifier field, wherein a modulation scheme of the target identifier field is used to indicate that the first PPDU is the PPDU transmitted to the AMP device.

In some embodiments, the target identifier field includes a first identifier field and a second identifier field, wherein the modulation scheme for at least one of the first identifier field or the second identifier field is used to indicate that the first PPDU is the PPDU transmitted to the AMP device.

In some embodiments, the modulation schemes for the first identifier field and the second identifier field are both Q-BPSK; or the modulation scheme for the first identifier field is Q-BPSK and the modulation scheme for the second identifier field is BPSK; or the modulation scheme for the second identifier is Q-BPSK and the modulation scheme for the first identifier field is BPSK.

In some embodiments, the first preamble part includes a legacy signal (L-SIG) field; and in a case where the modulation schemes for the first identifier field and the second identifier field are both Q-BPSK, or, the modulation scheme for the first identifier field is BPSK and the modulation scheme for the second identifier field is Q-BPSK, values of the first identifier field and the second identifier field satisfy a predefined relationship with a value of the L-SIG field.

In some embodiments, the AMP part includes a second preamble part, the second preamble part including a first synchronization sequence, wherein the first synchronization sequence is a synchronization sequence associated with the AMP device, and the first synchronization sequence is used to indicate that the first PPDU is the PPDU transmitted to the AMP device.

In some embodiments, the first preamble part includes a first BPSK identifier field and a second BPSK identifier field, and the first synchronization sequence follows the first BPSK identifier field and the second BPSK identifier field.

In some embodiments, the first preamble part includes a third identifier field, wherein the third identifier field is used to indicate that the first PPDU is the PPDU transmitted to the AMP device.

In some embodiments, the first preamble part includes a first BPSK identifier field, a second BPSK identifier field, and the third identifier field, and the third identifier field follows the first BPSK identifier field and the second BPSK identifier field.

In some embodiments, a modulation scheme for the third identifier field is either BPSK or Q-BPSK.

In some embodiments, a number of symbols of the third identifier field belongs to a set {1, 2, 3, 4}.

In some embodiments, the AMP part includes a second preamble part, the second preamble part including a fourth identifier field, wherein the fourth identifier field is used to indicate that the first PPDU is the PPDU transmitted to the AMP device.

In some embodiments, the second preamble part includes a second synchronization sequence and the fourth identifier field, and the fourth identifier field follows the second synchronization sequence.

In some embodiments, a modulation scheme for the fourth identifier field is either BPSK or Q-BPSK.

In some embodiments, a number of symbols of the fourth identifier field belongs to a set {1, 2, 3, 4}.

In some embodiments, a length field in the L-SIG field of the first preamble part is used to indicate that the first PPDU is the PPDU transmitted to the AMP device.

In some embodiments, a result of the length field value modulo 3 is not equal to 0.

In some embodiments, the AMP part includes a medium access control (MAC) part, wherein a type field in a MAC header of the MAC part is used to indicate that the first PPDU is the PPDU transmitted to the AMP device.

In some embodiments, a value of the type field being a reserved value indicates that the first PPDU is the PPDU transmitted to the AMP device.

In some embodiments, an uplink communication unit may be a communication interface or a transceiver, or a communication chip, or an I/O interface of the SoC. The processing unit may be one or a plurality of processors.

It should be understood that the AMP device 500 according to the embodiments of the present disclosure may correspond to the AMP device, and the above and other operations and/or functions of various units of the AMP device 500 are intended to implement corresponding processes of the AMP device in the method illustrated in FIG. 8 to FIG. 15, which are not elaborated herein for brevity.

FIG. 17 is a schematic block diagram of a non-AMP device 800 according to some embodiments of the present disclosure. As illustrated in FIG. 17, the non-AMP device 800 includes:
receiving, by a non-AMP device, a first PPDU, wherein the first PPDU includes a first preamble part and an AMP part:
determining, by at least one of the first preamble part or AMP part that the first PPDU is the PPDU transmitted to the AMP device.

In some embodiments, the first preamble part includes a target identifier field, wherein a modulation scheme of the target identifier field is used to indicate that the first PPDU is the PPDU transmitted to the AMP device.

In some embodiments, the target identifier field includes a first identifier field and a second identifier field, wherein the modulation scheme for at least one of the first identifier field or the second identifier field is used to indicate that the first PPDU is the PPDU transmitted to the AMP device.

In some embodiments, the modulation schemes for the first identifier field and the second identifier field are both Q-BPSK; or the modulation scheme for the first identifier field is Q-BPSK and the modulation scheme for the second identifier field is BPSK; or the modulation scheme for the second identifier is Q-BPSK and the modulation scheme for the first identifier field is BPSK.

In some embodiments, the first preamble part includes a legacy signal (L-SIG) field; and in a case where the modulation schemes for the first identifier field and the second identifier field are both Q-BPSK, or, the modulation scheme for the first identifier field is BPSK and the modulation scheme for the second identifier field is Q-BPSK, values of the first identifier field and the second identifier field satisfy a predefined relationship with a value of the L-SIG field.

In some embodiments, the AMP part includes a second preamble part, the second preamble part including a first synchronization sequence, wherein the first synchronization sequence is a synchronization sequence associated with the AMP device, and the first synchronization sequence is used to indicate that the first PPDU is the PPDU transmitted to the AMP device.

In some embodiments, the first preamble part includes a first BPSK identifier field and a second BPSK identifier field, and the first synchronization sequence follows the first BPSK identifier field and the second BPSK identifier field.

In some embodiments, the first preamble part includes a third identifier field, wherein the third identifier field is used to indicate that the first PPDU is the PPDU transmitted to the AMP device.

In some embodiments, the first preamble part includes a first BPSK identifier field, a second BPSK identifier field, and the third identifier field, and the third identifier field follows the first BPSK identifier field and the second BPSK identifier field.

In some embodiments, a modulation scheme for the third identifier field is either BPSK or Q-BPSK.

In some embodiments, a number of symbols of the third identifier field belongs to a set {1, 2, 3, 4}.

In some embodiments, the AMP part includes a second preamble part, the second preamble part including a fourth identifier field, wherein the fourth identifier field is used to indicate that the first PPDU is the PPDU transmitted to the AMP device.

In some embodiments, the second preamble part includes a second synchronization sequence and the fourth identifier field, and the fourth identifier field follows the second synchronization sequence.

In some embodiments, a modulation scheme for the fourth identifier field is either BPSK or Q-BPSK.

In some embodiments, a number of symbols of the fourth identifier field belongs to a set {1, 2, 3, 4}.

In some embodiments, a length field in the L-SIG field of the first preamble part is used to indicate that the first PPDU is the PPDU transmitted to the AMP device.

In some embodiments, a result of the length field value modulo 3 is not equal to 0.

In some embodiments, the AMP part includes a medium access control (MAC) part, wherein a type field in a MAC header of the MAC part is used to indicate that the first PPDU is the PPDU transmitted to the AMP device.

In some embodiments, a value of the type field being a reserved value indicates that the first PPDU is the PPDU transmitted to the AMP device.

In some embodiments, an uplink communication unit may be a communication interface or a transceiver, or a communication chip, or an I/O interface of the SoC. The processing unit may be one or a plurality of processors.

It should be understood that the non-AMP device 800 according to the embodiments of the present disclosure may correspond to the non-AMP device, and the above and other operations and/or functions of various units of the non-AMP device 800 are intended to implement corresponding processes of the non-AMP device in the methods illustrated in FIG. 8 to FIG. 15, which are not elaborated herein for brevity.

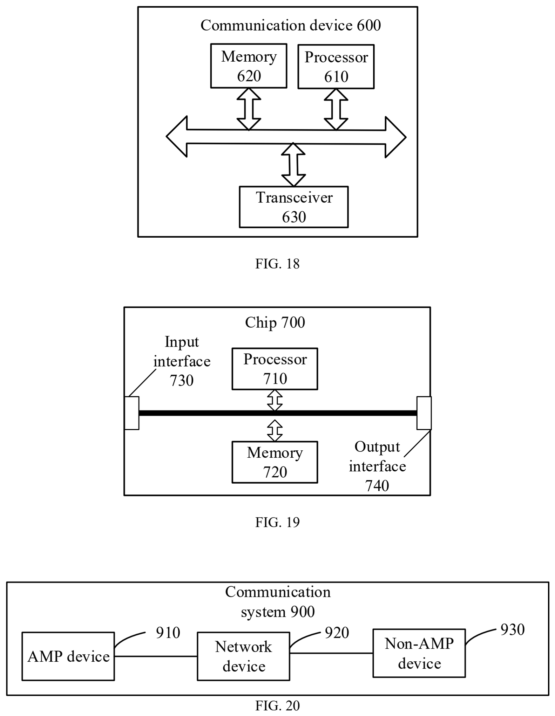

FIG. 18 is a schematic structural diagram of a communication device 600 according to some embodiments of the present disclosure. As illustrated in FIG. 18, the communication device 600 includes a processor 610. The processor 610 is configured to call and run the one or more computer programs stored in the memory to perform the methods according to the method embodiments of the present disclosure.

In some embodiments, as illustrated in FIG. 18, the communication device 600 may further include a memory unit 620. The processor 610 may call and run the one or more computer programs stored in the memory unit 620 to perform the methods according to the embodiments of the present disclosure.

The memory unit 620 may be a standalone component independent of the processor 610, or may be integrated in the processor 620.

In some embodiments, as illustrated in FIG. 18, the communication device 600 may further include a transceiver 630. The processor 610 may communicate with other devices by controlling the transceiver 630. Specifically, the processor 610 may transmit messages or data to other devices, or receive messages or data from other devices.

The transceiver 630 may include a transmitter and a receiver. The transceiver 630 may further include one or a plurality of antennas.

In some embodiments, the communication device 600 may be specifically the network device according to the embodiments of the present disclosure. The communication device 600 may perform all corresponding processes performed by the network device in the methods according to the embodiments of the present disclosure, which are not elaborated herein for brevity.

In some embodiments, the communication device 600 may be specifically the AMP device according to the embodiments of the present disclosure. The communication device 600 may perform all corresponding processes performed by the AMP device in the methods according to the embodiments of the present disclosure, which are not elaborated herein for brevity.

In some embodiments, the communication device 600 may be specifically the non-AMP device according to the embodiments of the present disclosure. The communication device 600 may perform all corresponding processes performed by the non-AMP device in the methods according to the embodiments of the present disclosure, which are not elaborated herein for brevity.

FIG. 19 is a schematic structural diagram of a chip 700 according to some embodiments of the present disclosure. As illustrated in FIG. 19, the chip 700 includes a processor 710. The processor 710 is configured to call and run the one or more computer programs stored in the memory to perform the methods according to the embodiments of the present disclosure.

In some embodiments, as illustrated in FIG. 19, the chip 700 may further include a memory 720. The processor 710 is configured to call and run one or more computer programs stored in the memory 720 to perform the methods according to the embodiments of the present disclosure.

The memory 720 may be a standalone component independent from the processor 710, or may be integrated in the processor 720.

In some embodiments, the chip 700 may further include an input interface 730. The processor 710 may communicate with other devices or chips by controlling the input interface 730. Specifically, the processor 710 may acquire messages or data transmitted by other devices or chips.

In some embodiments, the chip 700 may further include an output interface 740. The processor 710 may communicate with other devices or chips by controlling the output interface 740. Specifically, the processor 710 may output messages or data to other devices or chips.

In some embodiments, the chip is applicable to the network device according to the embodiments of the present disclosure. The chip is configured to perform all corresponding processes performed by the network device in the methods according to the embodiments of the present disclosure, which are not elaborated herein for brevity.

In some embodiments, the chip is applicable to the AMP device according to the embodiments of the present disclosure. The chip is configured to perform all corresponding processes performed by the AMP device in the methods according to the embodiments of the present disclosure, which are not elaborated herein for brevity.

In some embodiments, the chip is applicable to the non-AMP device in the embodiments of the present disclosure. The chip is configured to perform all corresponding processes performed by the non-AMP device in the methods according to the embodiments of the present disclosure, which are not elaborated herein for brevity.

It should be understood that the chip according to the embodiments of the present disclosure may also be referred as a system level chip, a system chip, a chip system, or an SoC, and the like.

FIG. 20 is schematic block diagram of a communication system 900 according to some embodiments of the present disclosure. As illustrated in FIG. 20, the communication system 900 includes an AMP device 910, a network device 920, and a non-AMP device 930.

The AMP device 910 is configured to perform all corresponding processes performed by the AMP device within the method mentioned in the above aspect. The network device is configured to perform all corresponding processes performed by the AMP device in the methods according to the above aspects, and the non-AMP device may be configured to perform all corresponding processes performed by the AMP device in the methods according to the above aspects, which are not elaborated herein for brevity.

It should be understood that the processor in the embodiments of the present disclosure is, an integrated circuit chip with a signal processing capability. In the implementations, the processes in the method embodiments are achieved by integrated logic circuits of hardware in the processor or instructions in the software form. The processor is a general processor, a digital signal processor (DSP), an application-specific integrated circuit (ASIC), a field-programmable gate array (FPGA), any other programmable logic device, discrete gate, transistor logic device, or discrete hardware assembly that is capable of achieving or performing various methods, processes, and logic blocks according to the embodiments of the present disclosure. The general processor is a microprocessor, any conventional processor, or the like. The processes in the methods according to the embodiments of the present disclosure may be directly embodied as being processed by a hardware decoding processor or being performed by a combination of hardware and software modules in the decoding processor. The software modules may be disposed in a random-access memory (RAM), a flash memory, a read-only memory (ROM), a programmable read-only memory (PROM), an electrically erasable programmable memory, a register, and other storage media mature in the field. The storage medium is disposed in the memory, and the processor reads the information in the memory and combines with its hardware to perform the processes of the method.

It should be understood that the memory in embodiments of the present disclosure may be a volatile or non-volatile memory, or include both the volatile memory and the non-volatile memory. The non-volatile memory may be a ROM, a PROM, an erasable PROM (EPROM), and electrically EPROM (EEPROM), or a flash memory. The volatile memory is a random-access memory (RAM) used as an external cache. By way of example but not limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus (DR RAM). It should be noted that the system and the memory described herein are intended to include, but not limited to these and any other suitable type of memory

It should be understood that the memory is exemplary but not for limitation. For example, the memory in the embodiments of the present disclosure may also be an SRAM, a DRAM, an SDRAM, a DDR SDRAM, an ESDRAM, an SLDRAM, a DR RAM, or the like. That is, the memory in the embodiments of the present disclosure is intended to include, but not limited to these any other suitable type of memory

Some embodiments of the present disclosure further provide a computer-readable storage medium configured to store one or more computer programs.

In some embodiments, the computer-readable storage medium is applicable to the network device in the embodiments of the present disclosure. The one or more computer programs, when loaded and run by a computer, cause the computer to perform all corresponding processes performed by the network device within the method embodiments of the present disclosure, which are not elaborated herein for brevity.

In some embodiments, the computer-readable storage medium is applicable to the mobile terminal/terminal device in the embodiments of the present disclosure. The one or more computer programs, when called and run by a computer, cause the computer to perform all corresponding processes performed by the mobile terminal/terminal device within the method embodiments of the present disclosure, which are not elaborated herein for brevity.

Some embodiments of the present disclosure further provide a computer program product including one or more computer program instructions.

In some embodiments, the computer program product is applicable to the network device in the embodiments of the present disclosure. The one or more computer program instructions, when called and executed by a computer, cause the computer to perform all corresponding processed performed by the network device within the method embodiments of the present disclosure, which are not elaborated herein for brevity.

In some embodiments, the computer program product is applicable to the mobile terminal/terminal device in the embodiments of the present disclosure. The one or more computer program instructions, when called and executed by a computer, cause the computer to perform all corresponding processes performed by the mobile terminal/terminal device within the method embodiments of the present disclosure, which are not elaborated herein for brevity.

Some embodiments of the present disclosure further provide a computer program.

In some embodiments, the computer program is applicable to the network device in the embodiments of the present disclosure. The computer program, when called and run by a computer, causes the computer to perform all corresponding processed performed by the network device within the method embodiments of the present disclosure, which are not elaborated herein for brevity.

In some embodiments, the computer program is applicable to the mobile terminal/terminal device in the embodiments of the present disclosure. The computer program, when called and run by a computer, causes the computer to perform all corresponding processes performed by the mobile terminal/terminal device within the method embodiments of the present disclosure, which are not elaborated herein for brevity.

It is to be understood by those of ordinary skill in the art that the units and algorithmic processes of the examples described in conjunction with the embodiments disclosed herein can be practiced by the electronic hardware, or by a combination of the computer software and the electronic hardware. Whether these functions are achieved by the hardware or the software depends on the specific application and design constraints of the technical solution. For each application, those skilled in the art may use different methods to implement the described functions, and such implementations should not be considered beyond the scope of the present disclosure. It is to be understood by those skilled in the art that for the specific operation processes of the system, device, and unit described above, reference may be made to the corresponding processes in the embodiments of the method for convenience and simplicity of description, which are not repeated for convenience and brevity.

In the embodiments of the present disclosure, it should be understood that the systems, devices and methods may be practiced in other ways. For example, the apparatus embodiments are only exemplary. For example, the division of the units is only the logical function division, and the actual implementation may have another division. For example, several units or assemblies can be combined or integrated into another system, or some features may be ignored or not performed. In addition, the coupling, the direct coupling, or the communication connection between each other may be achieved by some interfaces, and an indirect coupling or communication connection between devices or units may be electrical, mechanical, or in other form.

The units described as separate parts may or may not be physically separated, and the parts illustrated as the units may or may not be physical units. That is, the parts may be disposed in one place, or distributed in several network units. Some or all of the units can be selected according to actual needs to achieve the purposes of the technical solutions according to the embodiments.

In addition, the functional units in the embodiments of the present disclosure may be integrated in a processing unit or present physically separately, or two or more units may be integrated in a unit.

In a case where the functions are achieved in the form of software functional units and sold or used as standalone products, the functions may be stored in a computer-readable storage medium. Based on the understanding, the nature of the technical solutions may be embodied in the form of a software product, and the software product is stored in a storage medium and includes a number of instructions to cause a computer device (which may be a personal computer, a server, a network equipment, or the like) to perform all or part of the processes of the method in various embodiments of the present disclosure. The storage medium includes a U disk, a mobile hard sick, a ROM, a RAM, a disk, a disc, or other media that can store program codes.

Described above are merely specific embodiments of the present disclosure, and the scope of protection of the present disclosure is not limited. Any changes or replacements made within the technical scope of the present disclosure by those skilled in the art should be encompassed within the scope of protection of the present disclosure. Thus, the scope of protection of the present disclosure shall prevail in the scope of protection of the claims.

## Claims

1. A method for wireless communication, comprising:
transmitting, by a network device, a first physical layer protocol data unit (PPDU), wherein the first PPDU comprises a first preamble part and an ambient power (AMP) part, wherein the first PPDU is a PPDU transmitted to an AMP device.

2. The method according to claim 1, wherein the first preamble part comprises a target identifier field, wherein a modulation scheme for the target identifier field is used to indicate that the first PPDU is the PPDU transmitted to the AMP device.

3. The method according to claim 2, wherein the target identifier field comprises a first identifier field and a second identifier field, wherein a modulation scheme for at least one of the first identifier field or the second identifier field is used to indicate that the first PPDU is the PPDU transmitted to the AMP device.

4. The method according to claim 3, wherein
the modulation schemes for the first identifier field and the second identifier field are both orthogonal binary phase shift keying (Q-BPSK); or
the modulation scheme for the first identifier field is Q-BPSK and the modulation scheme for the second identifier field is binary phase shift keying (BPSK); or
the modulation scheme for the second identifier field is Q-BPSK and the modulation scheme for the first identifier field is BPSK.

5. The method according to claim 4, wherein the first preamble part comprises a legacy signal (L-SIG) field; and in a case where the modulation schemes for the first identifier field and the second identifier field are both Q-BPSK, or, the modulation scheme for the first identifier field is BPSK and the modulation scheme for the second identifier field is Q-BPSK, values of the first identifier field and the second identifier field satisfy a predefined relationship with a value of the L-SIG field.

6. The method according to claim 1, wherein the AMP part comprises a second preamble part, the second preamble part comprising a first synchronization sequence, wherein the first synchronization sequence is a synchronization sequence associated with the AMP device, and the first synchronization sequence is used to indicate that the first PPDU is the PPDU transmitted to the AMP device.

7. The method according to claim 6, wherein the first preamble part comprises a first BPSK identifier field and a second BPSK identifier field, and the first synchronization sequence follows the first BPSK identifier field and the second BPSK identifier field.

8. The method according to any of one of claims 1 to 7, wherein the first preamble part comprises a third identifier field, wherein the third identifier field is used to indicate that the first PPDU is the PPDU transmitted to the AMP device.

9. The method according to claim 8, wherein the first preamble part comprises a first BPSK identifier field, a second BPSK identifier field, and the third identifier field, and the third identifier field follows the first BPSK identifier field and the second BPSK identifier field.

10. The method according to claim 8 or 9, wherein a modulation scheme for the third identifier field is either BPSK or Q-BPSK.

11. The method according to any one of claims 8 to 10, wherein a number of symbols of the third identifier field belongs to a set {1, 2, 3, 4}.

12. The method according to any of the claims 1 to 7, wherein the AMP part comprises a second preamble part, the second preamble part comprising a fourth identifier field, wherein the fourth identifier field is used to indicate that the first PPDU is the PPDU transmitted to the AMP device.

13. The method according to claim 12, wherein the second preamble part comprises a second synchronization sequence and the fourth identifier field, and the fourth identifier field follows the second synchronization sequence.

14. The method according to claim 12 or 13, wherein a modulation scheme for the fourth identifier field is either BPSK or Q-BPSK.

15. The method according any of the claims 12 to 14, wherein a number of symbols of the fourth identifier field belongs to a set {1, 2, 3, 4}.

16. The method according to any one of claims 1 to 15, wherein a length field in theL-SIG of the first preamble part is used to indicate that the first PPDU is the PPDU transmitted to the AMP device.

17. The method according to claim 16, wherein a result of the length field value modulo 3 is not equal to 0.

18. The method according to any one of claims 1 to 17, wherein the AMP part comprises a medium access control (MAC) part, wherein a type field in a MAC header of the MAC part is used to indicate that the first PPDU is the PPDU transmitted to the AMP device.

19. The method according to claim 18, wherein a value of the type field is a reserved value used to indicate that the first PPDU is the PPDU transmitted to the AMP device.

20. A method for wireless communication, comprising:
receiving, by an ambient power (AMP) device, a first physical layer protocol data unit (PPDU), wherein the PPDU comprises a first preamble part and an AMP part.

21. The method according to claim 20, wherein the first preamble part comprises a target identifier field, wherein a modulation scheme for the target identifier field is used to indicate that the first PPDU is a PPDU transmitted to the AMP device.

22. The method according to claim 21, wherein the target identifier field comprises a first identifier field and a second identifier field, wherein a modulation scheme for at least one of the first identifier field or the second identifier field is used to indicate that the first PPDU is the PPDU transmitted to the AMP device.

23. The method according to claim 22, wherein
the modulation schemes for the first identifier field and the second identifier field are both orthogonal binary phase shift keying (Q-BPSK); or
the modulation scheme for the first identifier field is Q-BPSK and the modulation scheme for the second identifier field is binary phase shift keying (BPSK); or
the modulation scheme for the second identifier field is Q-BPSK and the modulation scheme for the first identifier field is BPSK.

24. The method according to claim 23, wherein the first preamble part comprises a legacy signal (L-SIG) field; and in a case where the modulation schemes for the first identifier field and the second identifier field are both Q-BPSK, or, the modulation scheme for the first identifier field is BPSK and the modulation scheme for the second identifier field is Q-BPSK, values of the first identifier field and the second identifier field satisfy a predefined relationship with a value of the L-SIG field.

25. The method according to any one of claims 20 to 24, wherein the AMP part comprises a second preamble part, the second preamble part comprising a first synchronization sequence, wherein the first synchronization sequence is a synchronization sequence associated with the AMP device, and the first synchronization sequence is used to indicate that the first PPDU is the PPDU transmitted to the AMP device.

26. The method according to claim 25, wherein the first preamble part comprises a first BPSK identifier field and a second BPSK identifier field, and the first synchronization sequence follows the first BPSK identifier field and the second BPSK identifier field.

27. The method according to any one of claims 20 to 26, wherein the first preamble part comprises a third identifier field, wherein the third identifier field is used to indicate that the first PPDU is the PPDU transmitted to the AMP device.

28. The method according to claim 27, wherein the first preamble part comprises a first BPSK identifier field, a second BPSK identifier field, and the third identifier field, wherein the third identifier field follows the first BPSK identifier field and the second BPSK identifier field.

29. The method according to claim 27 or 28, wherein a modulation scheme for the third identifier field is either BPSK or Q-BPSK.

30. The method according any of the claims 27 to 29, wherein a number of symbols of the third identifier field belongs to a set {1, 2, 3, 4}.

31. The method according to any of the claims 20 to 26, wherein the AMP part comprises a second preamble part, the second preamble part comprising a fourth identifier field, wherein the fourth identifier field is used to indicate that the first PPDU is the PPDU transmitted to the AMP device.

32. The method according to claim 31, wherein the second preamble part comprises a second synchronization sequence and the fourth identifier field, and the fourth identifier field follows the second synchronization sequence.

33. The method according to claim 31 or 32, wherein a modulation scheme for the fourth identifier field is either BPSK or Q-BPSK.

34. The method according any of the claims 31 to 33, wherein a number of symbols of the fourth identifier field belongs to a set {1, 2, 3, 4}.

35. The method according to any one of claims 20 to 34, wherein a length field in theL-SIG field of the first preamble part is used to indicate that the first PPDU is the PPDU transmitted to the AMP device.

36. The method according to claim 35, wherein a result of the length field value modulo 3 is not equal to 0.

37. The method according to any one of claims 20 to 36, wherein the AMP part comprises a medium access control (MAC) part, wherein a type field in a MAC header of the MAC part is used to indicate that the first PPDU is the PPDU transmitted to the AMP device.

38. The method according to claim 37, wherein a value of the type field is a reserved value used to indicate that the first PPDU is the PPDU transmitted to the AMP device.

39. A method for wireless communication, comprising:
receiving, by a non-ambient power (non-AMP) device, a first physical layer protocol data unit (PPDU) wherein the first PPDU comprises a first preamble part and an AMP part; and
determining, that the first PPDU is the PPDU transmitted to an AMP device based on at least one of the first preamble part or the AMP part.

40. The method according to claim 39, wherein the first preamble part comprises a target identifier field, wherein a modulation scheme for the target identifier field is used to indicate that the first PPDU is the PPDU transmitted to the AMP device.

41. The method according to claim 40, wherein the target identifier field comprises a first identifier field and a second identifier field, wherein at least one of the modulation schemes for the first identifier field or the second identifier field is used to indicate that the first PPDU is the PPDU transmitted for the AMP device.

42. The method according to claim 41, wherein
the modulation schemes for the first identifier field and the second identifier field are both orthogonal binary phase shift keying (Q-BPSK); or
the modulation scheme for the first identifier field is Q-BPSK and the modulation scheme for the second identifier field is binary phase shift keying (BPSK); or
the modulation scheme for the second identifier field is Q-BPSK and the modulation scheme for the first identifier field is BPSK.

43. The method according to claim 42, wherein the first preamble part comprises a legacy signal (L-SIG) field, and in a case where the modulation schemes for the first identifier field and the second identifier field are both Q-BPSK, or the modulation scheme for the first identifier field is BPSK and the modulation scheme for the second identifier field is Q-BPSK, values of the first identifier field and the second identifier field satisfy a predefined relationship with a value of the L-SIG field.

44. The method according to any one of claims 39 to 43, wherein the AMP part comprises a second preamble part, the second preamble part comprising a first synchronization sequence, wherein the first synchronization sequence is a synchronization sequence associated with the AMP device, and the first synchronization sequence is used to indicate that the first PPDU is the PPDU transmitted for the AMP device.

45. The method according to claim 44, wherein the first preamble part comprises a first BPSK identifier field and a second BPSK identifier field, wherein the first synchronization sequence follows the first BPSK identifier field and the second BPSK identifier field.

46. The method according to any one of claims 39 to 45, wherein the first preamble part comprises a third identifier field, wherein the third identifier field is used to indicate that the first PPDU is the PPDU transmitted for the AMP device.

47. The method according to claim 46, wherein the first preamble part comprises the first BPSK identifier field, the second BPSK identifier field, and the third identifier field, wherein the third identifier field follows the first BPSK identifier field and the second BPSK identifier field.

48. The method according to claim 46 or 47, wherein a modulation scheme for the third identifier field is either BPSK or Q-BPSK.

49. The method according any of the claims 46 to 48, wherein a number of symbols of the third identifier field belongs to a set {1, 2, 3, 4}.

50. The method according to any of the claims 39 to 45, wherein the AMP part comprises a second preamble part, the second preamble part comprising a fourth identifier field, wherein the fourth identifier field is used to indicate that the first PPDU is the PPDU transmitted for the AMP device.

51. The method according to claim 50, wherein the second preamble part comprises a second synchronization sequence and the fourth identifier field, wherein the fourth identifier field follows the second synchronization sequence.

52. The method according to claim 50 or 51, wherein a modulation scheme for the fourth identifier field is either BPSK or Q-BPSK.

53. The method according any of the claims 50 to 52, wherein a number of symbols of the fourth identifier field belongs to a set {1, 2, 3, 4}.

54. The method according to any one of the claims 39 to 53, wherein a length field in the L-SIG field of the first preamble part is used to indicate that the first PPDU is the PPDU transmitted to the AMP device.

55. The method according to claim 54, wherein a result of the length field value modulo 3 is not equal to 0.

56. The method according to any one of claims 39 to 55, wherein the AMP part comprises a medium access control (MAC) part, wherein a type field in a MAC header of the MAC part is used to indicate that the first PPDU is the PPDU transmitted to the AMP device.

57. The method according to claim 56, wherein a value of the type field is a reserved value used to indicate that the first PPDU is the PPDU transmitted to the AMP device.

58. A network device, comprising:
a communication unit, configured to receive a first physical layer protocol data unit (PPDU), wherein the first PPDU comprises a first preamble part and an ambient power (AMP) part, and the first PPDU is the PPDU transmitted to an AMP device.

59. An ambient power (AMP) device, comprising:
a communication unit, configured to receive a first physical layer protocol data unit (PPDU), wherein the first PPDU comprises a first preamble part and an AMP part.

60. A non-ambient power (non-AMP) device, comprising:
a communication unit, configured to receive a first physical layer protocol data unit (PPDU), wherein the first PPDU comprises a first preamble part and an AMP part; and
a processing unit, configured to determine that the first PPDU is the PPDU transmitted to an AMP device according to at least one of the first preamble part or the AMP part.

61. A network device, comprising: a processor and a memory, wherein the memory is configured to store computer programs, and the processor is configured to call and run the one or more computer programs stored in the memory to perform the method as defined in any one of the claims 1 to 19.

62. An ambient power (AMP) device, comprising: a processor and a memory, wherein the memory is configured to store one or more computer programs, and the processor is configured to call and run the one or more computer programs stored in the memory to perform the method as defined in any one of the claims 20 to 38.

63. A non-ambient power (non-AMP) device, comprising: a processor and a memory, wherein the memory is configured to store one or more computer programs, and the processor is configured to call and run the one or more computer programs stored in the memory to perform the method as defined in any one of the claims 39 to 57.

64. A chip comprising: a processor, configured to call and execute one or more computer programs stored in a memory to cause a device equipped with the chip to perform the method as defined in any one of the claims 1 to 19, or to perform the method as defined in any one of the claims 20 to 38, or to perform the method as defined in any one of the claims 39 to 57.

65. A computer-readable storage medium, configured to store one or more computer programs, wherein the one or more computer programs, when called and run by a computer, cause the computer to perform the method as defined in any one of the claims 1 to 19, or to perform the method as defined in any one of the claims 20 to 38, or to perform the method as defined in any one of the claims 39 to 57.

66. A computer program product, comprising: one or more computer program instructions, wherein the one or more computer program instructions, when called and executed by a computer, cause the computer to perform the method as defined in any one of the claims 1 to 19, or to perform the method as defined in any one of the claims 20 to 38, or to perform the method as defined in any one of the claims 39 to 57.

67. A computer program, wherein the computer program, when called and run by a computer, causes the computer to perform the method as defined in any one of the claims 1 to 19, or to perform the method as defined in any one of the claims 20 to 38, or to perform the method as defined in any one of the claims 39 to 57.
